# EUROPÄISCHE PATENTSCHRIFT

(11) **EP 2 342 163 B1**
(45) Veröffentlichungstag und Bekanntmachung des Hinweises auf die Patenterteilung: **05.09.2012**
(21) Anmeldenummer: 09736896.3
(22) Anmeldetag: 09.10.2009
(51) Int. Cl.: C01B 33/04, C07F 7/02

(54) **VERFAHREN ZUR AUFREINIGUNG NIEDERMOLEKULARER HYDRIDOSILANE**
METHOD FOR PURIFYING LOW MOLECULAR HYDRIDOSILANES
PROCÉDÉ DE PURIFICATION D'HYDRUROSILANES DE FAIBLE POIDS MOLÉCULAIRE

(30) Priorität: 03.11.2008 DE 102008043422
(43) Veröffentlichungstag der Anmeldung: 13.07.2011
(73) Patentinhaber: Evonik Degussa GmbH, 45128 Essen (DE)
(72) Erfinder: BRAUSCH, Nicole, 45130 Essen (DE); BAUMGARTEN, Götz, 45721 Haltern am See (DE); STOCHNIOL, Guido, 45721 Haltern am See (DE); ÖNAL, Yücel, 63906 Erlenbach (DE); TROCHA, Martin, 45136 Essen (DE)
(86) Internationale Anmeldenummer: PCT/EP2009/063135
(87) Internationale Veröffentlichungsnummer: WO 2010/060676

(56) Entgegenhaltungen:
- WO-A1-89/01965
- WO-A1-2007/085321
- GB-A- 2 077 710
- US-A- 6 027 705

## Beschreibung

Die vorliegende Erfindung betrifft ein Verfahren zur Aufreinigung niedermolekularer Hydridosilane bzw. ihrer Gemische.

Hydridosilane bzw. ihre Gemische, insbesondere niedermolekulare Hydridosilane bzw. ihre Gemische, werden in der Literatur als mögliche Edukte für die Erzeugung von Siliciumschichten diskutiert. Dabei sind unter Hydridosilanen Verbindungen zu verstehen, die lediglich Silicium- und Wasserstoffatome enthalten und die eine lineare, verzweigte oder (ggf. bi-/poly-)cyclische Struktur mit Si-H-Bindungen aufweisen.

So beschreibt EP 1 087 428 A1 z.B. Verfahren zur Herstellung von Siliciumfilmen, bei denen Hydridosilane mit mindestens drei Siliciumatomen eingesetzt werden. EP 1 284 306 A2 beschreibt u.a. Gemische enthaltend eine Hydridosilan-Verbindung mit mindestens drei Silicium-Atomen und mindestens eine Hydridosilan-Verbindung ausgewählt aus Cyclopentasilan, Cyclohexasilan und Silylcyclopentasilan, die ebenfalls zur Herstellung von Siliciumfilmen eingesetzt werden können.

Unter niedermolekularen Hydridosilanen im Sinne der vorliegenden Erfindung werden dabei Hydridosilane mit maximal 20 Siliciumatomen verstanden.

Hydridosilane können z.B. durch Dehalogenierung und Polykondensation von Halosilanen mit Alkalimetallen hergestellt werden (GB 2 077 710 A).

Andere Verfahren zur Herstellung von Hydridosilanen beruhen auf einer Dehydropolymerisationsreaktion von Hydridosilanen, bei der thermisch (US 6,027,705 A) oder durch Einsatz von Katalysatoren wie hydridischen Cyclopentadienyl-Komplexen von Scandium, Yttrium oder seltenen Erden (US 4,965,386 A, US 5,252,766 A) und von Übergangsmetallen bzw. ihren Komplexen (JP 02-184513 A) aus den Hydridosilan-Edukten unter formaler H₂-Abspaltung Hydridosilan-Addukte gebildet werden.

Vorteilhaft kann die Synthese linearer Hydridosilane der allgemeinen Formel H-(SiH₂)ₙ-H (mit n ≥ 2) nach einem Verfahren erfolgen, bei dem ein oder mehrere Hydridosilane, Wasserstoff und ein oder mehrere Übergangsmetallverbindungen umfassend Elemente der 8., 9. oder 10. Gruppe des Periodensystems (Fe, Co, Ni, Ru, Rh, Pd, Re, Os, Ir, Pt) und der Lanthanoide (Ce, Pr, Nd, Pm, Sm, Eu, Gd, Tb, Dy, Ho, Er, Tm, Yb, Lu), bei einem Druck von mehr als 5 bar absolut zur Reaktion gebracht, nachfolgend entspannt und die gebildeten Hydridosilane vom erhaltenen Reaktionsgemisch abgetrennt werden (noch nicht offengelegte EP 08158401.3). Die Abtrennung kann dabei nach den dem Fachmann bekannten Verfahren erfolgen, insbesondere über Destillation oder über den Einsatz adsorptiver Verfahren.

Bei diesem Verfahren und bei anderen metallkatalysierten Verfahren zur Herstellung von Hydridosilanen werden die bei einer homogenen Katalyse zum Einsatz kommenden Metalle bevorzugt in Kombination mit Liganden wie Bipyridyl, unsubstituiertem oder substituiertem Cyclopentadienyl, Cyclooctadien, CN, CO, Alkylphosphin, Arylphosphin, Alkyl- oder Arylphosphit, Alkylarylphosphin, bidentaten Phosphinliganden mit verbrückenden Heterocyclen oder verbrückenden Arylresten, heteroatomhaltigen Liganden, Alkyldiphosphin R²R¹-P(CH_{y})ₓP-R³R⁴ (wobei R¹, R², R³ und R⁴ unabhängig voneinander Alkyl oder Aryl und x = 1-10 ist und y = 0, 1 oder 2 sein kann), R²R¹-P-CR⁵R⁶(CR⁷R⁸)ₓ-CR⁹R¹⁰-P-R³R⁴ (wobei R¹, R², R³, R⁴, R⁵, R⁶, R⁷, R⁸, R⁹, R¹⁰ unabhängig voneinander H, Alkyl oder Aryl und x = 1-10 ist) und R¹-C≡C-R² (wobei R¹ und R² unabhängig voneinander Alkylphosphin oder Arylphosphin sind) eingesetzt. Der Katalysator wird dabei in der Regel unter Schutzgasatmosphäre in situ in einem geeigneten getrocknetem Lösungsmittel (z.B. Toluol, reflux. über Na, Benzophenon) präpariert und unter Erhaltung einer Schutzgasatmosphäre in einen Reaktor überführt. Durch Zugabe des bzw. der Hydridosilan-Edukte und ggf. weiteren Gasen wie Inertgasen oder Wasserstoff wird dann das Gemisch zur Reaktion gebracht. In Abhängigkeit der eingestellten Parameter werden dann die gewünschten Hydridosilane gebildet. Das entstehende Gemisch bestehend aus den gebildeten Hydridosilanen, Lösungsmittel und ggf. nicht umgesetzten Edukten kann nach Abtrennung des homogenen Katalysators sowie höhermolekularer Nebenkomponenten (d.h. solche mit mehr als 20 Si-Atomen, insbesondere entsprechende Polysiline und Polysilane) zur Anwendung im Halbleiter- bzw. Photovoltaikbereich zum Einsatz kommen, da bei gegebener Reinheit der Einsatzstoffe keine Verunreinigung von störenden Nebenkomponenten zu erwarten sind.

Auch für über eine thermische Dehydropolymerisationsreaktion bzw. für über Dehalogenierung und Polykondensation von Halosilanen mit Alkalimetallen hergestellte Hydridosilane ist es wünschenswert, höhermolekulare Nebenprodukte, d.h. solche mit mehr als 20 Si-Atomen, insbesondere entsprechende Hydridosilane und Polysiline, vom Reaktionsgemisch abtrennen zu können, da diese insbesondere bei hohen Molekulargewichten den Nachteil aufweisen, bei der Herstellung von Siliciumschichten zu Inhomogenitäten zu führen.

Da eine thermische Beanspruchung dieser Reaktionslösungen zur Weiterreaktion der bereits entstandenen Silane und zu einer Bildung von silinartigen Feststoffen und somit zu einer deutlichen Ausbeuteverminderung führt, ist eine Destillation selbst unter vermindertem Druck nicht die optimale Auftrennungsmethodik.

Demgegenüber haben adsorptive Aufreinigungsmethoden, wie Trennverfahren auf Basis von Zeolithen, den Nachteil, dass sie einen aufwändigen'Aufreinigungsschritt des Adsorbens erfordern.

Vor diesem Hintergrund bestand die Aufgabe der vorliegenden Erfindung darin, ein Verfahren zur Abtrennung von Verunreinigungen ausgewählt aus der Gruppe von Verbindungen mit mehr als 20 Si-Atomen, insbesondere der entsprechenden Hydridosilane und Polysiline, und/oder der Gruppe der (aus mindestens einem Metall der Übergangsmetallreihe oder der Lanthanoide und mindestens einem Liganden bestehenden) Homogen-Katalysator-Systeme von niedermolekularen Hydridosilanen bereitzustellen, das die Nachteile des Standes der Technik nicht aufweist.

Überraschenderweise konnte festgestellt werden, dass die vorliegende Aufgabe gelöst wird durch ein Verfahren zur Aufreinigung niedermolekularer Hydridosilan-Lösungen, bei dem eine aufzureinigende Lösung umfassend mindestens ein niedermolekulares Hydridosilan, mindestens ein Lösemittel und mindestens eine Verunreinigung ausgewählt aus der Gruppe der Verbindungen mit mindestens 20 Si-Atomen (insbesondere höhermolekulare Hydridosilane und Polysiline) und/oder der Gruppe der Homogen-Katalysator-Systeme einem Querstrom-Membranverfahren mit mindestens einem Membrantrennschritt unter Verwendung einer Permeationsmembran unterzogen werden.

Unter einem Querstrom-Membranverfahren mit einem Membrantrennschritt im Sinne der vorliegenden Erfindung ist dabei ein druckgetriebenes Membranverfahren zu verstehen, bei dem die aufzureinigende Lösung bei einem Druck p_{I} in Kontakt mit einer Seite einer Permeationsmembran gebracht wird, und auf der anderen Seite der Permeationsmembran, auf der der Druck p_{II} herrscht, der kleiner als der Druck p_{I} ist, eine aufgereinigte Lösung entnommen wird, d.h. eine Lösung, die im Vergleich zu der aufzureinigenden Lösung eine geringere Konzentration der mindestens einen Verunreinigung enthält. Bei einem Querstrom-Membranverfahren mit zwei Membrantrennschritten wird die aufgereinigte Lösung nach dem ersten Aufreinigungsschritt erneut bei einem Druck p_{I} in Kontakt mit der Permeationsmembran gebracht und auf der anderen Seite bei einem Druck p_{II} entnommen. Für drei und mehr Membrantrennschritte erhöht sich die Zahl der hinzukommenden weiteren Aufreinigungsschritte entsprechend.

Bei einem solchen Membranverfahren können je nach erforderlicher Trenngrenze Ultra- oder Nanofiltrationsmembranen sowie Umkehrosmosemembranen als Permeationsmembranen verwendet werden. Diese einsetzbaren Membrantypen umfassen dabei entweder poröse permeable Polymer- oder Keramik-Schichten oder permeable Polymer- oder Keramik-Schichten auf einer porösen Unterstruktur, wobei sich Umkehrosmosemembranen durch eine Trenngrenze von < 250 g/mol, Nanofiltrationsmembranen durch eine Trenngrenze von 250 - 1000 g/mol und Ultrafiltrationsmembranen durch eine Trenngrenze von 1.000 - 100.000 g/mol auszeichnen.

Bevorzugt eignen sich organophile Nanofiltrationsmembranen, wie sie aus der Aufarbeitung von organischen Lösungsmitteln bekannt sind, weil mit diesem Verfahren gelöste Verunreinigungen in einem Molmassenbereich von 250 - 1000 g/mol besonders effizient entfernt werden können.

Aus der Literatur (z.B. Solvent resistant nanofiltration: separating on a molecular level; Pieter Vandezande, Lieven E. M. Gevers and Ivo F. J. Vankelecom; Chem. Soc. Rev., 2008, 37, 365-405) ist zwar allgemein bekannt, dass höhermolekulare *organische,* d.h. kohlenstoffhaltige, Verbindungen von entsprechenden niedermolekularen organischen Verbindungen mittels organophiler Nanofiltration abgetrennt werden können. Auch wird dort und weiterhin auch in GB 1 453 504 bzw. DE 10 2006 003 618 A1 beschrieben, dass Homogen-Katalysator-Ligandsysteme von organischen Reaktionsprodukten abgetrennt werden können.

Über das Verhalten von *Hydridosilanen* bzw. ihren Gemischen gegenüber Permeationsmembranen ist demgegenüber bislang in der Literatur nichts bekannt. Insbesondere aufgrund der hohen Instabilität der Silane im Gegensatz zu den homologen Alkanen war eine Übertragbarkeit der Erfahrungen mit Alkanen nicht zu erwarten. Im Gegensatz zu den entsprechenden Alkanen sind die Hydridosilane nur unter Luftabschluss synthetisierbar. Silane mit ein bis vier Siliciumatomen sind weiterhin sehr unbeständig und können sich z.B. an der Luft selbst entzünden, explodieren und spontan zu Siliciumdioxid und Wasser zersetzen. Somit war nicht davon auszugehen, dass sich die aufzureinigenden Hydridosilane inert gegenüber den üblichen Permeationsmembranen verhalten würden.

Das erfindungsgemäße Verfahren bietet darüber hinaus den Vorteil, dass es aufbautentechnisch einfach in Herstellprozesse für niedermolekulare Hydridosilane, insbesondere Herstellverfahren auf Basis der metallkatalysierten Dehydropolymerisation integriert werden kann. Insbesondere im Falle einer Integration in einen Aufbau für metallkatalysierte Dehydropolymerisation kann der aus einem dem Reaktor nachgeschalteten Membrantrennschritt stammende, katalysatorhaltige Retentatstrom dem Reaktor zur Recyclierung wieder zugeführt werden, während das aufgereinigte Produkt abgeführt wird.

Das erfindungsgemäße Aufreinigungsverfahren bietet weiterhin den überraschenden Vorteil, dass verunreinigte niedermolekulare Hydridosilanlösungen, die sowohl Verunreinigungen mit mehr als 20 Si-Atomen als auch Verunreinigungen auf Basis von Homogen-Katalysatoren enthalten - insbesondere im Falle von Reaktionsproduktlösungen aus einer Synthese von niedermolekularen Hydridosilanen über metallkatalysierte Dehydropolymerisationsverfahren - über ein einziges Aufreinigungsverfahren entfernt werden können.

Dabei lassen sich die Verunreinigung bzw. die Verunreinigungen besonders gut entfernen, wenn mindestens zwei Membrantrennschritte, bevorzugt mindestens drei Membrantrennschritte durchgeführt werden.

Besonders gut über das erfindungsgemäße Verfahren entfernbar sind Hydridosilane bzw. Polysiline mit Molmassen über 600 g/mol, bevorzugt größer als 1000 g/mol. Dabei wird beobachtet, dass sich Verunreinigungen umso besser abtrennen lassen, je größer das Molmassenverhältnis von Verunreinigung und aufzureinigendem Produkt ist.

Weiterhin lassen sich über das erfindungsgemäße Verfahren besonders gut Verunreinigungen ausgewählt aus der Gruppe der Homogen-Katalysator-Systeme entfernen, die ein Metall ausgewählt aus der 4., 5., 6., 7., 8., 9. oder 10. Gruppe des Periodensystems aufweisen, besonders bevorzugt ein Metall ausgewählt aus Fe, Co, Ni, Ru, Rh, Pd, Re, Os, Ir, Pt, W und Mo.

Besonders gut entfernbar über das erfindungsgemäße Aufreinigungsverfahren sind außerdem Homogen-Katalysator-Systeme, die einen Liganden ausgewählt aus Halogen, Wasserstoff, Alkyl, Aryl, Alkylsilan, Arylsilan, Olefin, Alkylcarboxyl, Arylcarboxyl, Acetylacetonatoalkoxyl, Aryloxy, Alkylthio, Arylthio, substituiertem oder unsubstituiertem Cyclopentadienyl, Cyclooctadien, Cyanoalkan, aromatische Cyanoverbindungen, CN, CO, NO, Alkylamin, Arylamin, Pyridin, Bipyridin, (Hetero)-Alkylphosphin, (Hetero)Arylphosphin, (Hetero)Alkylarylphosphin, (Hetero)Alkylphosphit, (Hetero)Arylphosphit, Alkylstiban, Arylstiban, Alkylarylstiban, Alkylarsan, Arylarsan oder Alkylarylarsan aufweisen.

Besonders gute Ergebnisse werden erzielt, wenn der Ligand ausgewählt wird aus Bipyridyl, unsubstituiertem oder substituiertem Cyclopentadienyl, Cyclooctadien, CN, CO, Alkylphosphin, Arylphosphin, Alkyl- oder Arylphosphit, Alkylarylphosphin, bidentaten Phosphinliganden mit verbrückenden Heterocyclen oder verbrückenden Arylresten, heteroatomhaltigen Liganden, Alkyldiphosphin R²R¹-P(CH_{y})ₓP-R³R⁴ (wobei R¹, R², R³ und R⁴ unabhängig voneinander Alkyl oder Aryl und x = 1-10 ist und y = 0, 1 oder 2 sein kann), R²R¹-P-CR⁵R⁶(CR⁷R⁸)ₓ-CR⁹R¹⁰-P-R³R⁴ (wobei R¹, R², R³, R⁴, R⁵, R⁶, R⁷, R⁸, R⁹, R¹⁰ unabhängig voneinander H, Alkyl oder Aryl und x = 1-10 ist) und R¹-C≡C-R² (wobei R¹ und R² unabhängig voneinander Alkylphosphin oder Arylphosphin sind) ist.

Von diesen wiederum sind Systeme mit besonders hoher Stabilität, d.h. solche mit Organophosphor-Liganden, insbesondere solche auf Basis von Nickel oder Rhodium, am besten entfernbar.

Das erfindungsgemäße Verfahren eignet sich für die Aufreinigung von Lösungen auf Basis der unterschiedlichsten Lösemittel. Die beste Kompatibilität mit den üblicherweise eingesetzten Membranen resultiert, wenn das mindestens eine Lösemittel der aufzureinigenden Lösung ausgewählt aus der Gruppe der aprotischen unpolaren Lösemittel, d.h. der Alkane, substituierten Alkane, Alkene, Alkine, Aromaten ohne oder mit aliphatischen oder aromatischen Substituenten, halogenierten Kohlenwasserstoffe, Tetramethylsilan, oder der Gruppe der aprotischen polaren Lösemittel, d.h. der Ether, aromatischen Ether, substituierten Ether, Ester oder Säureanhydride, Ketone, tertiäre Amine, Nitromethan, DMF (Dimethylformamid) DMSO (Dimethylsulfoxid) oder Propylencarbonat ist. Besonders bevorzugt kann das erfindungsgemäße Verfahren mit Lösungen von Toluol, n-Hexan oder Tetradecan durchgeführt werden.

Vorzugsweise für das Querstrom-Membranverfahren einsetzbare Membranen sind solche, die als trennaktive (permeable) Schicht eine Polymerschicht aus Polydimethylsiloxan (PDMS) oder anderen Polysiloxanen, Polyimid (PI), Polyamidimid (PAI), Acrylonitril/Glycidylmethacrylat (PANGMA), Polyamid (PA), Polyethersulfon (PES), Polysulfon (PSU), Celluloseacetat (CA), Polyetherimid (PEI), Polyvinylidenfluorid (PVDF), Polyacrylnitril (PAN), Polyetheretherketon (PEEK), Polycarbonat (PC), Polybenzimidazol (PBI), Polyacrylate, Polyetheramid (PIA), Polyethylenoxidamid (PEBAX), Polyisobutylen (PIB), Polyphenylenoxid (PPO), Polyvinylalkohol (PVA), sulfonierte Polyetheretherketone (SPEEK) oder Cellulose aufweisen. Weiterhin vorteilhaft einsetzbare Membranen sind solche enthaltend eine trennaktive Schicht aus Polymeren mit intrinsischer Mikroporösität (PIM) oder hydrophobierte keramische Membranen.

Bevorzugte Membranen sind solche auf Basis von PET/PAN/PDMS, die im Handel unter der Bezeichnung oNF2 von der Firma GMT, Rheinfelden, oder PET/PAN/PI, die im Handel unter der Bezeichnung Starmem, von der Firma Grace Davison, Littleton, CO, US, geführt werden.

Vorzugsweise werden die Membranen in Form von Membranmodulen, insbesondere in Form von offenkanaligen Kissenmodulsystemen, bei denen die Membranen thermisch zu Membrantaschen verschweißt sind, oder in Form von Wickelmodulen, bei denen die Membranen zu Membrantaschen verklebt und mit Feed-spacern um ein Permeatsammelrohr aufgewickelt sind, eingesetzt.

Vorzugsweise einzusetzende Membranen sind solche, die für Moleküle bis zu einer Molmasse von 400 g/mol durchlässig sind.

Der mindestens eine Membrantrennschritt des Querstrom-Membranverfahrens wird bevorzugt bei transmembranen Druckdifferenzen Δp = p_{I} - p_{II} von 0,5 MPa, bevorzugt 0,5 - 10 MPa, besonders bevorzugt 1 - 5 MPa durchgeführt. In diesem Bereich lässt sich das Trennverfahren besonders effizient durchführen

Weiterhin wird der mindestens eine Membrantrennschritt des Querstrom-Membranverfahrens zur Erzielung einer besonders guten Aufreinigung bevorzugt bei einer Temperatur von 10 - 120 °C, besonders bevorzugt bei 15 - 45 °C durchgeführt.

Der mindestens eine Membrantrennschritt des Querstrom-Membranverfahrens wird weiterhin zur Erzielung einer gleichermaßen guten und schnellen Aufreinigung bevorzugt bei Überstromgeschwindigkeiten an der Membran von 0,1 bis 15 m/s durchgeführt.

Besonders gut eignet sich das erfindungsgemäße Aufreinigungsverfahren zur Aufreinigung von niedermolekularen Hydridosilanlösungen, die über ein Verfahren zur Synthese linearer Hydridosilane der allgemeinen Formel H-(SiH₂)ₙ-H (mit n ≥ 2) herstellbar sind, bei dem ein oder mehrere Hydridosilane, Wasserstoff und ein oder mehrere Übergangsmetallverbindungen umfassend Elemente der 8., 9. oder 10. Gruppe des Periodensystems (Fe, Co, Ni, Ru, Rh, Pd, Re, Os, Ir, Pt) und der Lanthanoide (Ce, Pr, Nd, Pm, Sm, Eu, Gd, Tb, Dy, Ho, Er, Tm, Yb, Lu), bei einem Druck von mehr als 5 bar absolut zur Reaktion gebracht werden.

Das erfindungsgemäße Aufreinigungsverfahren kann vorteilhaft in Herstellprozesse für niedermolekulare Hydridosilane, insbesondere Herstellverfahren auf Basis metallkatalysierter Dehydropolymerisation, integriert werden. Insbesondere im Falle einer Integration in Herstellverfahren über metallkatalysierte Dehydropolymerisation kann vorteilhaft ein aus einem dem Reaktor nachgeschalteten Membrantrennschritt stammender, katalysatorhaltige Retentatstrom dem Reaktor zur Recyclierung wieder zugeführt werden, während das aufgereinigte Produkt im Permeatstrom abgeführt werden kann.

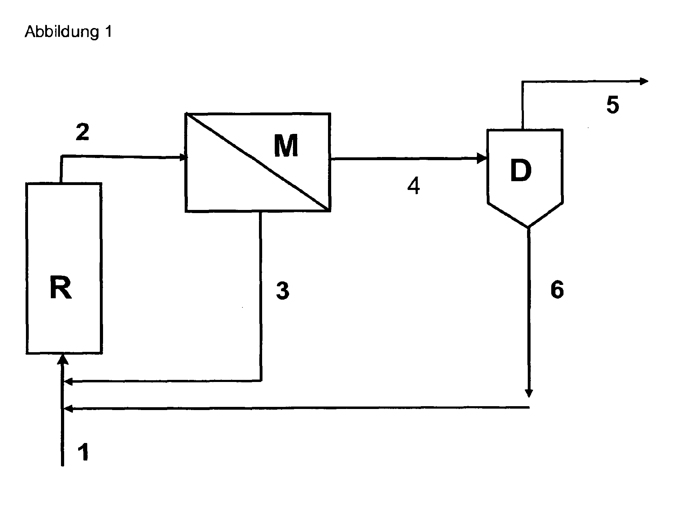

In Abbildung 1 ist eine schematische Abbildung eines experimentellen Aufbaus für eine Ausführungsform des erfindungsgemäßen Verfahrens dargestellt. Bei dieser Ausführungsform werden die Reaktanden 1 und ein Rückführstrom 6 in den Reaktor R zur Dehydrierung eingespeist, in dem die Polysilansynthese stattfindet. Der Reaktor kann dabei ein Rührkessel oder ein Rohrreaktor sein. Das Reaktionsgemisch 2 wird direkt auf die Membran M geführt. Der an der Membran erhaltene Retentatstrom 3 wird in die Reaktion zurückgeführt. Der an der Membran M erhaltene Permeatstrom 4 wird in eine thermische Trennvorrichtung D, z.B. in einen Dünnschichtverdampfer, geführt. In diesem erfolgt eine Auftrennung in Polysilanprodukt, das als Strom 5 die thermische Trennvorrichtung verlässt, und einen Strom 6, der Hochsieder, Lösungsmittel und in der Membranabtrennung nicht abgetrennten Komplexkatalysator, Lösungsmittel und/oder freien Liganden enthält und in den Reaktor R zurückgeführt wird.

Die folgenden Vorversuche und Beispiele sollen die Erfindung näher erläutern, ohne den Schutzbereich zu beschränken, der sich aus der Beschreibung und den Patentansprüchen ergibt.

### Vorversuche

Polymermembranen aus PET/PAN/PDMS und PET/PAN/PI werden eingelegt in nach Abschluss einer Dehydropolymerisation ausgehend von Monosilan erhaltenen, noch nicht weiter aufgereinigten Reaktionssystemen bestehend aus 1) einem Gemisch niederer Hydridosilane mit zwei bis zehn Silicium-Atomen, 2) den bei der Dehydropolymerisation entstandenen höhermolekularen Verunreinigungen umfassend Polysiline und Hydridosilane mit mehr als 20 Si-Atomen, 3) dem Lösemittel Toluol und 4) dem Katalysatorsystem bestehend aus i) dem Metall-Precursor Nickelacetylacetetonat bzw. Rhodiumacetatdimer und ii) einem Phosphin- bzw. Phosphitliganden (Triphenylphosphin bzw. Bisdiphenylphosphinobenzol). Überraschend wurde festgestellt, dass bei den Einlegeversuchen über 2 Wochen keine Veränderungen festzustellen waren.

### Beispiele

### Herstellung des aufzureinigenden Systems

0,1 mmol Nickelacetylacetonat und ein 2,1 facher Überschuß (±)-2,2'-Bis(diphenyl-phosphino)-1,1'-binaphthyl werden unter Erhalt einer Schutzgasatmosphäre (Argon) eingewogen, und in ca. 30 ml trockenem Toluol gelöst. In einem inertisierten, mit Glasliner, Thermoelement, Druckaufnehmer, Flüssigprobennahmestelle, Gaszuführung und Gasabführung ausgestatteten Edelstahlautoklaven wird die Katalysatorlösung vorgelegt. Der Reaktor wird zusätzlich mit 120 ml trockenem Toluol befüllt.

Über die Gaszuführung wird der Autoklav mit Monosilan beaufschlagt, bis ein Druck von ca. 60 bar erreicht ist. Anschließend wird der Reaktor zusätzlich bis zum Erreichen eines Drucks von ca. 70 bar mit Wasserstoff beaufschlagt. Im Anschluss wird der Reaktor auf die gewünschte Temperatur geheizt und der Rührer (700 U/min) gestartet.

Nach einer Reaktionszeit von 20 h wird die Reaktion beendet, der Reaktor entspannt und die Flüssigphase gaschromatographisch untersucht. Die nachfolgend aufgeführte Tabelle 1 zeigt die Ergebnisse gaschromatographischer Untersuchungen 0,5, 1, 2, 3 und 20 h nach dem Start der Reaktion zur Verteilung der kurzkettigen Hydridosilane.

**Tabelle 1: Ergebnisse der gaschromatographischen Untersuchung**

| | **dedektierte Flächen im GC nach entsp. Reaktionszeit** | | | | |
|---|---|---|---|---|---|
| | **0,5** | **1** | **2** | **3** | **20** |
| **Monosilan** | 2552806 | 5270670 | 6791620 | 5746166 | 4311954 |
| **Disi lan** | 5137020 | 7926128 | 10653553 | 8490576 | 6131529 |
| **Trisilan** | 3908573 | 5708463 | 7630474 | 5596087 | 4066175 |
| **Tetrasilan** | 2304489 | 3446239 | 4959430 | 3572319 | 2693252 |
| **Benzol** | 79562 | 67571 | 89084 | 59582 | 28211 |
| **Pentasilan** | 992595 | 1676832 | 2712526 | 2033741 | 1696334 |
| **> Si6** | 199734 | 468813 | 1216554 | 892295 | 726990 |

### Prinzipielle Beschreibung des Aufreinigungsschrittes

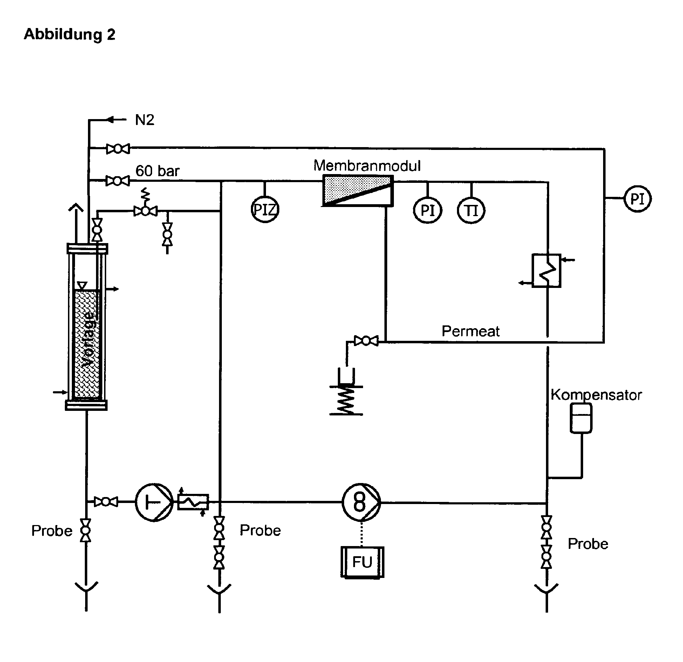

Die bestehende Anlage mit dem Aufbau gemäß Abbildung 2 (Abkürzungen: PI - Druckanzeige; TI - Temperaturanzeige; FU - Frequenzumrichter; PIZ - Differenzdruckermittler) wird mit getrocknetem Toluol gespült und anschließend ausgeheizt (Argon/Vakuum im Wechsel). Dann wird die Vorlage unter Erhalt der Schutzgasatmosphäre mit dem aufzureinigenden Reaktionsgemisch befüllt.

Bei offener Ventilstellung wird die Pumpe eingeschaltet und das Reaktionsgemisch direkt auf die Membran geführt. Nach Erreichen von einem Systemdruck von 10 bar wird zusätzlich die Kreislaufpumpe zugeschaltet. Die Druckhaltung erfolgt über das eingebaute Druckhalteventil. Aus der Nanofiltration wird an der Membran das Permeat erhalten, welches vorwiegend aus gelösten Hydridosilanen in Lösungsmittel besteht. Das bei der Nanofiltration anfallende Retentat enthält den im Lösungsmittel gelösten Katalysator bestehend aus Metallprecursor und Liganden sowie Verunreinigungen mit mehr als 20 Si-Atomen. Diese werden im Retentat aufkonzentriert.

### Beispiel 1

450 mL des beschriebenen Reaktionsgemischs werden vorgelegt. Das aufzureinigende Reaktionsgemisch gelangt in das Membranmodul ausgeführt als Flachmembrantestzelle der Firma Dauborn Membransysteme, Ratzeburg mit einer Fläche von 80 cm². In diesem Modul war eine PDMS-Membran des Typs oNF2 der Firma GMT, Rheinfelden, D, die mit einem transmembranen Druck von 15 bar mit 100 L/h überströmt wurde. Nach Erhalt von 225 mL Permeat wurde die Permeatflussleistung ermittelt und der Systemrückhalt bezogen auf die Katalysatorbestandteile Phosphor und Nickel im Mischpermeat und Retentat ermittelt.

### Beispiel 2

450 mL des beschriebenen Reaktionsgemischs werden vorgelegt. Das aufzureinigende Reaktionsgemisch gelangt in das Membranmodul ausgeführt als Flachmembrantestzelle der Firma Dauborn Membransysteme, Ratzeburg mit einer Fläche von 80 cm². In diesem Modul war eine PI-Membran des Typs Starmem 240 der Firma Grace, Littleton, CO, US, die mit einem transmembranen Druck von 20 bar mit 100 L/h überströmt wurde. Nach Erhalt von 225 mL Permeat wurde die Permeatflussleistung ermittelt und der Systemrückhalt bezogen auf die Katalysatorbestandteile Phosphor und Nickel im Mischpermeat und Retentat ermittelt.

### Beispiel 3

450 mL des beschriebenen Reaktionsgemischs werden vorgelegt. Das aufzureinigende Reaktionsgemisch gelangt in das Membranmodul ausgeführt als Flachmembrantestzelle der Firma Dauborn Membransysteme, Ratzeburg mit einer Fläche von 80 cm². In diesem Modul war eine PI-Membran des Typs Starmem 240 der Firma Grace, Littleton, CO, US, die mit einem transmembranen Druck von 15 bar mit 100 L/h überströmt wurde. Nach Erhalt von 360 mL Permeat wurde die Permeatflussleistung ermittelt und der Systemrückhalt bezogen auf die Katalysatorbestandteile Phosphor und Nickel im Mischpermeat und Retentat ermittelt.

Die Ergebnisse der Membrantrennung der Beispiele 1, 2 und 3 sind in der nachfolgenden Tabelle 2 dargestellt.

| | **Beispiel 1** | **Beispiel 2** | **Beispiel 3** |
|---|---|---|---|
| Membrantyp | PDMS, oNF2, Fa. GMT, Rheinfelden | Starmem 240, Grace Davison, Littleton, CO, US | Starmem 240, Grace Davison, Littleton, CO, US |
| Druck (bar) | 15 | 15 | 20 |
| Temperatur (°C) | 30 | 30 | 37 |
| Permeatausbeute | 50% | 50% | 80% |
| Permeatfluss (L/m²h) bei Endkonzentrierung | 37,5 | 21,7 | 12,0 |

| **Retentat** | | | |
|---|---|---|---|
| Ni (ppm) | 7 | 12 | 49 |
| Phosphor (ppm) | 43 | 51 | 228 |

| **Permeat** | | | |
|---|---|---|---|
| Nickel (ppm) | <1 | <1 | 1 |
| Phosphor (ppm) | 2 | <1 | 1 |

## Patentansprüche

1. Verfahren zur Aufreinigung niedermolekularer Hydridosilan-Lösungen, bei dem eine aufzureinigende Lösung umfassend
a. mindestens ein niedermolekulares Hydridosilan,
b. mindestens ein Lösemittel und
c. mindestens eine Verunreinigung ausgewählt aus der Gruppe der Verbindungen mit mindestens 20 Si-Atomen und/oder der Gruppe der Homogen-Katalysator-Systeme
einem Querstrom-Membranverfahren mit mindestens einem Membrantrennschritt unter Verwendung einer Permeationsmembran unterzogen werden.

2. Verfahren nach Anspruch 1, **dadurch gekennzeichnet, dass** die Permeationsmembran eine Ultrafiltrationsmembran, eine Nanofiltrationsmembran oder eine Umkehrosmosemembran, bevorzugt eine organophile Nanofiltrationsmembran ist.

3. Verfahren nach Anspruch 1 oder 2, **dadurch gekennzeichnet, dass** die aufzureinigende Lösung
a. mindestens eine Verunreinigung ausgewählt aus der Gruppe der Verbindungen mit mindestens 20 Si-Atomen und
b. mindestens eine Verunreinigung ausgewählt aus der Gruppe der Homogen-Katalysator-Systeme umfasst.

4. Verfahren nach einem der Ansprüche 1 bis 3, **dadurch gekennzeichnet, dass** das Querstrom-Memranverfahren mindestens zwei Membrantrennschritte, bevorzugt mindestens drei Membrantrennschritte umfasst.

5. Verfahren nach einem der vorhergehenden Ansprüche, **dadurch gekennzeichnet, dass** die mindestens eine Verunreinigung
a. mindestens ein Hydridosilan oder Polysilin
b. mit einer Molmasse über 600 g/mol, bevorzugt mehr als 1000 g/mol ist.

6. Verfahren nach einem der vorhergehenden Ansprüche, **dadurch gekennzeichnet, dass** die mindestens eine Verunreinigung ein Homogen-KatalysatorSystem ist, das ein Metall ausgewählt aus der 4., 5., 6., 7., 8., 9. oder 10. Gruppe des Periodensystems aufweist, bevorzugt ein Metall ausgewählt aus Fe, Co, Ni, Ru, Rh, Pd, Re, Os, Ir, Pt, W und Mo.

7. Verfahren nach einem der vorhergehenden Ansprüche, **dadurch gekennzeichnet, dass** die mindestens eine Verunreinigung ein Homogen-KatalysatorSystem ist, das einen Liganden ausgewählt aus Halogen, Wasserstoff, Alkyl, Aryl, Alkylsilan, Arylsilan, Olefin, Alkylcarboxyl, Arylcarboxyl, Acetylacetonatoalkoxyl, Aryloxy, Alkylthio, Arylthio, substituiertem oder unsubstituiertem Cyclopentadienyl, Cyanoalkan, aromatischen Cyanoverbindungen, CN, CO, NO, Alkylamin, Arylamin, Pyridin, Alkylphosphin, Arylphosphin, Alkylarylphosphin, Alkylphosphit, Arylphosphit, Alkylstiban, Arylstiban, Alkylarylstiban, Alkylarsan, Arylarsan oder Alkylarylarsan aufweist.

8. Verfahren nach einem der vorhergehenden Ansprüche, **dadurch gekennzeichnet, dass** das mindestens eine Lösemittel der aufzureinigenden Lösung ausgewählt aus der Gruppe der aprotischen unpolaren oder der aprotischen polaren Lösemittel ist.

9. Verfahren nach Anspruch 8, **dadurch gekennzeichnet, dass** das Lösemittel Toluol, n-Hexan oder Tetradecan ist.

10. Verfahren nach einem der vorhergehenden Ansprüche, **dadurch gekennzeichnet, dass** als Membran für den mindestens einen Membrantrennschritt des Querstrom-Membranverfahrens mindestens eine Membran ausgewählt aus
a. Membranen, die als trennaktive Schicht eine Polymerschicht aus Polydimethylsiloxan (PDMS) oder anderen Polysiloxanen, Polyimid (PI), Polyamidimid (PAI), Acrylonitril/Glycidylmethacrylat (PANGMA), Polyamid (PA), Polyethersulfon (PES), Polysulfon (PSU), Celluloseacetat (CA), Polyetherimid (PEI), Polyvinylidenfluorid (PVDF), Polyacrylnitril (PAN), Polyetheretherketon (PEEK), Polycarbonat (PC), Polybenzimidazol (PBI), Polyacrylate, Polyetheramid (PIA), Polyethylenoxidamid (PEBAX), Polyisobutylen (PIB), Polyphenylenoxid (PPO), Polyvinylalkohol (PVA), sulfonierte Polyetheretherketone (SPEEK) oder Cellulose enthalten,
b. Membranen enthaltend eine trennaktive Schicht aus Polymeren mit intrinsischer Mikroporösität (PIM) oder
c. hydrophobierten keramischen Membranen eingesetzt wird.

11. Verfahren nach einem der vorhergehenden Ansprüche, **dadurch gekennzeichnet, dass** als Membran für den mindestens einen Membrantrennschritt des Querstrom-Membranverfahrens mindestens ein Membranmodul ausgewählt aus
a. offenkanaligen Kissenmodulsystemen, bei denen die Membranen thermisch zu Membrantaschen verschweißt sind, oder
b. Wickelmodulen, bei denen die Membranen zu Membrantaschen verklebt und mit Feed-spacern um ein Permeatsammelrohr aufgewickelt sind, eingesetzt wird.

12. Verfahren nach einem der vorhergehenden Ansprüche, **dadurch gekennzeichnet, dass** die Membran für den mindestens einen Membrantrennschritt des Querstrom-Membranverfahrens für Moleküle bis zu einer Molmasse von 400 g/mol durchlässig ist.

13. Verfahren nach einem der vorhergehenden Ansprüche, **dadurch gekennzeichnet, dass** der mindestens eine Membrantrennschritt des Querstrom-Membranverfahrens bei einer transmembranen Druckdifferenz von ≥ 0,5 MPa, bevorzugt 0,5 - 10 MPa durchgeführt wird.

14. Verfahren nach einem der vorhergehenden Ansprüche, **dadurch gekennzeichnet, dass** der mindestens eine Membrantrennschritt des Querstrom-Membranverfahrens bei einer Temperatur von 10 - 120 °C durchgeführt wird.

15. Verfahren nach einem der vorhergehenden Ansprüche, **dadurch gekennzeichnet, dass** der mindestens eine Membrantrennschritt des Querstrom-Membranverfahrens bevorzugt bei Überstromgeschwindigkeiten an der Membran von 0,1 bis 15 m/s durchgeführt wird.

16. Verfahren nach einem der vorhergehenden Ansprüche, **dadurch gekennzeichnet, dass** die aufzureinigende niedermolekulare Hydridosilanlösung über ein Verfahren zur Synthese linearer Hydridosilane der allgemeinen Formel H-(SiH₂)ₙ-H (mit n ≥ 2) herstellbar sind, bei dem ein oder mehrere Hydridosilane, Wasserstoff und ein oder mehrere Übergangsmetallverbindungen umfassend Elemente der 8., 9. oder 10. Gruppe des Periodensystems (Fe, Co, Ni, Ru, Rh, Pd, Re, Os, Ir, Pt) und der Lanthanoide (Ce, Pr, Nd, Pm, Sm, Eu, Gd, Tb, Dy, Ho, Er, Tm, Yb, Lu), bei einem Druck von mehr als 5 bar absolut zur Reaktion gebracht werden.

17. Verfahren nach einem der vorhergehenden Ansprüche, **dadurch gekennzeichnet, dass** es in ein Herstellverfahren niedermolekularer Hydridosilane derart integriert ist, dass ein aus einem dem Synthese-Reaktor nachgeschalteten Membrantrennschritt stammender, katalysatorhaltige Retentatstrom dem Reaktor zur Recyclierung wieder zugeführt wird.

18. Verfahren nach Anspruch 17, **dadurch gekennzeichnet, dass** der aus dem Membrantrennschritt stammende Permeatstrom abgeführt wird.

## Claims

1. Process for purifying low molecular weight hydridosilane solutions, in which a solution to be purified comprising
a. at least one low molecular weight hydridosilane,
b. at least one solvent and
c. at least one impurity selected from the group of the compounds having at least 20 silicon atoms and/or the group of the homogeneous catalyst systems
is subjected to a crossflow membrane process with at least one membrane separation step using a permeation membrane.

2. Process according to Claim 1, **characterized in that** the permeation membrane is an ultrafiltration membrane, a nanofiltration membrane or a reverse osmosis membrane, preferably an organophilic nanofiltration membrane.

3. Process according to either of Claims 1 and 2, **characterized in that** the solution to be purified comprises
a. at least one impurity selected from the group of the compounds having at least 20 silicon atoms and
b. at least one impurity selected from the group of the homogeneous catalyst systems.

4. Process according to any one of Claims 1 to 3, **characterized in that** the crossflow membrane process comprises at least two membrane separation steps, preferably at least three membrane separation steps.

5. Process according to any one of the preceding claims, **characterized in that** the at least one impurity is
a. at least one hydrosilane or polysilyne
b. with a molar mass of more than 600 g/mol, preferably more than 1000 g/mol.

6. Process according to any one of the preceding claims, **characterized in that** the at least one impurity is a homogeneous catalyst system which comprises a metal selected from group 4, 5, 6, 7, 8, 9 or 10 of the Periodic Table, preferably a metal selected from Fe, Co, Ni, Ru, Rh, Pd, Re, Os, Ir, Pt, W and Mo.

7. Process according to any of the preceding claims, **characterized in that** the at least one impurity is a homogeneous catalyst system which comprises a ligand selected from halogen, hydrogen, alkyl, aryl, alkylsilane, arylsilane, olefin, alkylcarboxyl, arylcarboxyl, acetylacetonatoalkoxyl, aryloxy, alkylthio, arylthio, substituted or unsubstituted cyclopentadienyl, cyanoalkane, aromatic cyano compounds, CN, CO, NO, alkylamine, arylamine, pyridine, alkylphosphine, arylphosphine, alkylarylphosphine, alkyl phosphite, aryl phosphite, alkyl stibane, aryl stibane, alkyl aryl stibane, alkyl arsane, aryl arsane or alkyl aryl arsane.

8. Process according to any one of the preceding claims, **characterized in that** the at least one solvent of the solution to be purified is selected from the group of the aprotic nonpolar or aprotic polar solvents.

9. Process according to Claim 8, **characterized in that** the solvent is toluene, n-hexane or tetradecane.

10. Process according to any one of the preceding claims, **characterized in that** the membrane used for the at least one membrane separation step of the crossflow membrane process is at least one membrane selected from
a. membranes which contain, as the separation-active layer, a polymer layer of polydimethylsiloxane (PDMS) or other polysiloxanes, polyimide (PI), polyamideimide (PAI), acrylonitrile/glycidyl methacrylate (PANGMA), polyamide (PA), polyethersulphone (PES), polysulphone (PSU), cellulose acetate (CA), polyetherimide (PEI), polyvinylidene fluoride (PVDF), polyacrylonitrile (PAN), polyetheretherketone (PEEK), polycarbonate (PC), polybenzimidazole (PBI), polyacrylates, polyetheramide (PIA), polyethylene oxide amide (PEBAX), polyisobutylene (PIB), polyphenylene oxide (PPO), polyvinyl alcohol (PVA), sulphonated polyetheretherketones (SPEEK) or cellulose,
b. membranes containing a separation-active layer of polymers with intrinsic microporosity (PIM) or
c. hydrophobized ceramic membranes.

11. Process according to any one of the preceding claims, **characterized in that** the membrane used for the at least one membrane separation step of the crossflow membrane process is at least one membrane module selected from
a. open-channel cushion module systems in which the membranes are welded thermally to form membrane pockets, or
b. wound modules in which the membranes are adhesive bonded to form membrane pockets and are wound around a permeate collecting tube with feed spacers.

12. Process as claimed in any one of the preceding claims, **characterized in that** the membrane for the at least one membrane separation step of the crossflow membrane process is permeable to molecules up to a molar mass of 400 g/mol.

13. Process according to any one of the preceding claims, **characterized in that** the at least one membrane separation step of the crossflow membrane process is performed at a transmembrane pressure difference of ≥ 0.5 MPa, preferably 0.5 - 10 MPa.

14. Process according to any one of the preceding claims, **characterized in that** the at least one membrane separation step of the crossflow membrane process is performed at a temperature of 10-120°C.

15. Process according to any one of the preceding claims, **characterized in that** the at least one membrane separation step of the crossflow membrane process is performed preferably at overflow velocities at the membrane of 0.1 to 15 m/s.

16. Process according to any one of the preceding claims, **characterized in that** the low molecular weight hydridosilane solution to be purified is preparable by means of a process for the synthesis of linear hydridosilanes of the general formulal H-(SiH₂)ₙ-H (where n ≥ 2), in which one or more hydridosilanes, hydrogen and one or more transition metal compounds comprising elements of group 8, 9 or 10 of the Periodic Table (Fe, Co, Ni, Ru, Rh, Pd, Re, Os, Ir, Pt) and of the lanthanoids (Ce, Pr, Nd, Pm, Sm, Eu, Gd, Tb, Dy, Ho, Er, Tm, Yb, Lu) are reacted at a pressure of more than 5 bar absolute.

17. Process according to any one of the preceding claims, **characterized in that** it is integrated into a process for preparing low molecular weight hydridosilanes in such a way that a catalyst-containing retentate stream originating from a membrane separation step downstream of the synthesis reactor is fed back to the reactor for recycling.

18. Process according to Claim 17, **characterized in that** the permeate stream originating from the membrane separation step is discharged.

## Revendications

1. Procédé pour la purification de solutions d'hydridosilane de bas poids moléculaire, dans lequel une solution à purifier, comprenant
a. au moins un hydridosilane de bas poids moléculaire,
b. au moins un solvant et
c. au moins une impureté choisie dans le groupe des composés comprenant au moins 20 atomes de Si et/ou le groupe des systèmes catalytiques homogènes,
est soumise à un procédé membranaire à flux transversal comprend au moins une étape de séparation sur membrane avec utilisation d'une membrane de perméation.

2. Procédé selon la revendication 1, **caractérisé en ce que** la membrane de perméation est une membrane d'ultrafiltration, une membrane de nanofiltration ou une membrane d'osmose inverse, de préférence une membrane de nanofiltration organophile.

3. Procédé selon la revendication 1 ou 2, **caractérisé en ce que** la solution à purifier comprend
a. au moins une impureté choisie dans le groupe des composés comprenant au moins 20 atomes de Si et
b. au moins une impureté choisie dans le groupe des systèmes catalytiques homogènes.

4. Procédé selon l'une quelconque des revendications 1 à 3, **caractérisé en ce que** le procédé membranaire à flux transversal comprend au moins deux étapes de séparation sur membrane, de préférence au moins trois étapes de séparation sur membrane.

5. Procédé selon l'une quelconque des revendications précédentes, **caractérisé en ce que** ladite au moins une impureté
a. est au moins un hydridosilane ou une polysiline
b. présentant une masse molaire supérieure à 600 g/mole et de préférence supérieure à 1000 g/mole.

6. Procédé selon l'une quelconque des revendications précédentes, **caractérisé en ce que** ladite au moins une impureté est un système catalytique homogène, qui présente un métal choisi dans le 4ème, 5ème, 6ème, 7ème, 8ème, 9ème ou 10ème groupe du système périodique, de préférence un métal choisi parmi Fe, Co, Ni, Ru, Rh, Pd, Re, Os, Ir, Pt, W et Mo.

7. Procédé selon l'une quelconque des revendications précédentes, **caractérisé en ce que** ladite au moins une impureté est un système catalytique homogène, qui présente un ligand choisi parmi halogène, hydrogène, alkyle, aryle, alkylsilane, arylsilane, oléfine, alkylcarboxyle, arylcarboxyle, acétylacétonatoalcoxyle, aryloxy, alkylthio, arylthio, cyclopentadiényle substitué ou non substitué, cyanoalcane, les composés cyano aromatiques, CN, CO, NO, alkylamine, arylamine, pyridine, alkylphosphine, arylphosphine, alkylarylphosphine, alkylphosphite, arylphosphite, alkylstibane, arylstibane, alkylarylstibane, alkylarsane, arylarsane ou alkylarylarsane.

8. Procédé selon l'une quelconque des revendications précédentes, **caractérisé en ce que** ledit au moins un solvant de la solution à purifier est choisi dans le groupe formé par les solvants aprotiques non polaires ou les solvants aprotiques polaires.

9. Procédé selon la revendication 8, **caractérisé en ce que** le solvant est le toluène, le n-hexane ou le tétradécane.

10. Procédé selon l'une quelconque des revendications précédentes, **caractérisé en ce qu'**on utilise comme membrane pour ladite au moins une étape de séparation sur membrane du procédé membranaire à flux transversal au moins une membrane choisie parmi
a. les membranes qui contiennent comme couche active en séparation une couche de polymère en polydiméthylsiloxane (PDMS) ou en d'autres polysiloxanes, en polyimide (PI), en polyamideimide (PAI), en acrylonitrile/méthacrylate de glycidyle (PANGMA), en polyamide (PA), en polyéthersulfone (PES), en polysulfone (PSU), en acétate de cellulose (CA), en polyétherimide (PEI), en poly(fluorure de vinylidène) (PVDF), en polyacrylonitrile (PAN), en polyétheréthercétone (PEEC), en polycarbonate (PC), en polybenzimidazole (PBI), en polyacrylate, en polyétheramide (PIA), en poly(oxyde d'éthylène-amide) (PEBAX), en polyisobutylène (PIB), en poly(oxyde de phénylène) (PPO), en poly(alcool vinylique) (PVA), en polyétheréthercétones sulfonées (SPEEC) ou en cellulose,
b. les membranes contenant une couche active en séparation en polymères présentant une microporosité intrinsèque (PIM) ou
c. les membranes céramiques hydrofugées.

11. Procédé selon l'une quelconque des revendications précédentes, **caractérisé en ce qu'**on utilise comme membrane pour ladite au moins une étape de séparation sur membrane du procédé membranaire à flux transversal au moins une membrane modulaire choisie parmi
a. les systèmes modulaires à coussin à canaux ouverts, dans lesquels les membranes sont soudées thermiquement en sacs membranaires, ou
b. les modules enroulés, dans lesquels les membranes sont assemblées par collage en sacs membranaires et enroulées avec des intercalaires d'alimentation ("Feed-spacers") autour d'un tuyau de récupération de perméat.

12. Procédé selon l'une quelconque des revendications précédentes, **caractérisé en ce que** la membrane pour ladite au moins une étape de séparation sur membrane du procédé membranaire à flux transversal est perméable pour des molécules jusqu'à une masse molaire de 400 g/mole.

13. Procédé selon l'une quelconque des revendications précédentes, **caractérisé en ce que** ladite au moins une étape de séparation sur membrane du procédé membranaire à flux transversal est réalisée à une différence de pression transmembranaire ≥ 0,5 MPa, de préférence de 0,5-10 MPa.

14. Procédé selon l'une quelconque des revendications précédentes, **caractérisé en ce que** ladite au moins une étape de séparation sur membrane du procédé membranaire à flux transversal est réalisée à une température de 10-120°C.

15. Procédé selon l'une quelconque des revendications précédentes, **caractérisé en ce que** ladite au moins une étape de séparation sur membrane du procédé membranaire à flux transversal est de préférence réalisée à des vitesses de débordement sur la membrane de 0,1 à 15 m/s.

16. Procédé selon l'une quelconque des revendications précédentes, **caractérisé en ce que** la solution d'hydridosilane de bas poids moléculaire à purifier peut être préparée par un procédé pour la synthèse d'hydridosilanes linéaires de formule générale H-(SiH₂)ₙ-H (avec n ≥ 2), dans lequel un ou plusieurs hydridosilanes, de l'hydrogène et un ou plusieurs composés de métaux de transition comprenant les éléments du 8ème, 9ème ou 10ème groupe du système périodique (Fe, Co, Ni, Ru, Rh, Pd, Re, Os, Ir, Pt) et des lanthanides (Ce, Pr, Nd, Pm, Sm, Eu, Gd, Tb, Dy, Ho, Er, Tm, Yb, Lu) sont amenés à réagir à une pression de plus de 5 bars absolus.

17. Procédé selon l'une quelconque des revendications précédentes, **caractérisé en ce qu'**il est intégré dans un procédé de préparation d'hydridosilanes de bas poids moléculaire de manière telle qu'un flux de retentat contenant du catalyseur, provenant d'une étape de séparation sur membrane disposée en aval d'un réacteur de synthèse est réalimenté dans le réacteur pour le recyclage.

18. Procédé selon la revendication 17, **caractérisé en ce que** le flux de perméat provenant de l'étape de séparation sur membrane est évacué.
